# EUROPÄISCHE PATENTANMELDUNG

(11) **EP 2 008 704 A1**
(43) Veröffentlichungstag der Anmeldung: **31.12.2008**
(21) Anmeldenummer: 07111427.6
(22) Anmeldetag: 29.06.2007
(51) Int. Cl.: B01D 61/18, B01D 63/04, B01D 65/00, B01D 65/02

(54) **Filtrationsanlage mit mehreren parallel geschalteten Filtrationsmodulen**

(71) Anmelder: Inge AG, 86926 Greifenberg (DE)
(72) Erfinder: Peter, Berg, 86919 Utting (DE); Roland, Winkler, 86899 Landsberg (DE)
(74) Vertreter: Kietzmann, Lutz

(57) **Zusammenfassung**

Filtrationsanlage mit mehreren vertikal in Reihe angeordneten und parallel geschalteten Filtrationsmodulen (1a bis 1c), woran mindestens ein stirnseitiger Zulauf (2a, 2b) für die zu filtrierende Flüssigkeit angeordnet ist, die je zugeordnete sich längs erstreckende Sammelleitungen (3a bzw. 3b) speisen, wobei jedes Filtrationsmodul (1a bis 1c) mindestens einen Ablauf (4) für das Filtrat aufweist, welche in eine gemeinsame Filtratsammelleitung (5) münden. Hierbei ist die die Filtrationsmodule (1a bis 1c) miteinander verbindende Filtratsammelleitung (5) als Rückspülbehälters ausgebildet, wobei zum Rückspülen in die Filtratsammelleitung (5) eingeleitete Druckluft das Wasser aus der Filtratsammelleitung (5) in die Filtrationsmodule (1a a bis 1c) verdrängt.

## Beschreibung

Die vorliegende Erfindung betrifft eine Filtrationsanlage mit mehreren vertikal in Reihe angeordneten und strömungstechnisch parallel geschalteten Filtrationsmodulen, woran je mindestens ein stirnseitiger Zulauf für die zu filtrierende Flüssigkeit angeordnet ist, die von sich längs erstreckenden Sammelleitungen ausgehen, wobei jedes Filtrationsmodul mindestens einen Ablauf für das Filtrat aufweist, welche gemeinsam in eine Filtratsammelleitung münden.

Das Einsatzgebiet solcher Filtrationsanlagen erstreckt sich von Einrichtungen der Wasser-und Abwasseraufbereitung bis hin zur Industrieanlagen. Durch die Filtration werden je nach eingesetztem Membrantyp verunreinigte Flüssigkeiten - insbesondere Wasser - von Partikeln und gelösten Substanzen befreit. Es ist auch eine Abtrennung gelöster Stoffe - wie Salze - möglich. Das Filtrationsverfahren ist einfach und sicher durchzuführen, ohne Zusatz von Chemikalien und mit geringem Energieaufwand. Zum Einsatz hierfür kommen so genannten Filtrationsmodule, welche üblicherweise aus länglichen Hohlzylindern als Gehäuse bestehen, die zur Unterbringung von Filtrationsmembranen dienen. Moderne Filtrationsmembranen besitzen beispielsweise mehrere einzelne poröse Kapillar- oder Flachmembranen. Die zu filtrierende Flüssigkeit wird im Fall von Kapillarmembranen in diese hineingepresst. Durch die porösen Wandungen dringt dann die filtrierte Flüssigkeit hindurch. Die Filtration kann jedoch auch in umgekehrter Richtung erfolgen. Ein Filtrationsmodul enthält ein Bündel vieler einzelner solcher Filtrationsmembranen.

Zur Anpassung der Membranfilterfläche an den gewünschten Durchfluss werden mehrere Membranmodule parallel geschaltet. Dies geschieht in so genannten Modulracks als Trägerkonstruktion. Die Modulrecks sind Gestelle zur Aufnahme der Filtrationsmodule sowie deren Verbindungsleitungen. Insbesondere bei der hier interessierenden Ultra- und Mikrofiltration werden die die porösen Filtrationsmembrane enthaltenen Filtrationsmodule in bestimmten Zeitabständen mit zuvor produziertem Filtrat zurückgespült, um die an den Filtrationsmembranen haftenden Verunreinigungen abzulösen und auszuspülen. Dabei wird zuvor filtriertes Wasser in einem Tank außerhalb des Bereichs der Filtrationsmodule gesammelt und mit Hilfe einer Pumpe und einer geeigneten Ventilschaltung rückwärts durch das Modul gepresst.

Aus der DE 10 2005 032 286 A1 geht eine gattungsgemäße Filtrationsanlage hervor. Diese besteht aus mehreren vertikal in Reihe angeordneten einzelnen Filtrationsmodulen, an deren beiden Stirnseiten je ein Zulauf für die zu filtrierende Flüssigkeit angeordnet ist. Die jeweils stirnseitig angeordneten Zuläufe werden ausgehend von sich quer zur Verlaufsrichtung der einzelnen Filtrationsmodule und längs des Modulrecks erstreckende Sammelleitungen gespeist. Die zu filtrierende Flüssigkeit wird in diese oberhalb und unterhalb der Filtrationsmodule verlaufenden Sammelleitungen gepumpt und durch die Filtrationsmodule gepresst. Jedes Filtrationsmodul weist weiterhin mindestens einen Ablauf für das Filtrat auf, welche gemeinsam in eine Filtratsammelleitung münden. Von dieser Filtratsammelleitung wird die gereinigte Flüssigkeit weiter abgeleitet.

Für das Rückspülen ist die Installation eines außerhalb des Modulrecks angeordneten Rückspülbehälters und zahlreicher weitere Aggregate, wie Rückspülpumpe, Ventile, Steuerung, Messaufnehmer erforderlich. Insbesondere stellt die Rückspülpumpe ein recht aufwendiges Bauteil dar, da diese eine hohe elektrische Anschlussleistung benötigt. Eine weitere Problematik ist die Gefahr der Verschmutzung und Verkeimung des Rückspülbehälters aufgrund des oft hierin stehenden Wassers.

Aus der JP 10323544 geht eine weitere Filtrationsanlage mit einem extern angeordneten Rückspülbehälter hervor. Aus diesem wird mit Hilfe von Druckluft das Wasser durch die Filtrationsmodule gepresst. Nachteilig ist hier, dass der tankartige Rückspülbehälter als zusätzliches Bauteil anfällt und einen entsprechenden Bauraum beansprucht. Bei größeren Behälterdurchmessern verringert sich die Stabilität drastisch, was gewöhnlich mit dickeren Wandstärken ausgeglichen wird.

Es ist die Aufgabe der vorliegenden Erfindung, eine Filtrationsanlage mit mehreren parallel geschalteten Filtrationsmodulen zu schaffen, deren Rückspülung mit einem minimalen aggregatetechnischen Aufwand zuverlässig sichergestellt werden kann.

Die Aufgabe wird ausgehend von einer Filtrationsanlage gemäß dem Oberbegriff von Anspruch 1 in Verbindung mit dessen kennzeichnenden Merkmalen gelöst. Die nachfolgenden abhängigen Ansprüche gegen vorteilhafte Weiterbildungen der Erfindung wieder.

Die Erfindung schließt die technische Lehre, dass die die Filtrationsmodule miteinander verbindende Filtratsammelleitung als Rückspülbehälter ausgebildet ist, wobei zum Rückspülen die in die Filtratsammelleitung eingeleitete Druckluft das Wasser aus der Filtratsammelleitung in die Filtrationsmodule verdrängt.

Der Vorteil der erfindungsgemäßen Lösung liegt insbesondere darin, dass auf einen externen Rückspülbehälter gänzlich verzichtet werden kann. Ebenso entfällt eine Rückspülpumpe und die damit verbundenen Aggregate. Insgesamt wird die Ventilschaltung der erfindungsgemäßen Filtrationsanlage einfacher und es kann zu keiner Verkeimung mehr kommen, da die als Rückspülbehälter ausgebildete Filtratsammelleitung ständig durchflossen wird.

Vorzugsweise weist die als Rückspülbehälter ausgebildete Filtratsammelleitung einen größeren Querschnitt auf als die Sammelleitungen für die zu filtrierende Flüssigkeit. Hierdurch kann in einfacher Weise genügend Volumen zur Aufnahme von filtrierter Flüssigkeit gewonnen werden, welche zur Rückspülung nutzbar gemacht wird. Die aus Kunststoff oder Metall bestehende Filtratsammelleitung lässt sich z.B. in platzsparender Weise mittig oberhalb zweier benachbarter Sammelleitungen für zu filtrierende Flüssigkeit und parallel hierzu verlaufend anordnen. Insgesamt ergibt sich hierdurch eine recht kompakt bauende Filtrationsanlage.

Gemäß einer weiteren im Hinblick auf eine möglichst kompakte Bauform die Erfindung verbessernden Maßnahme wird vorgeschlagen, einen Kompressor zur Erzeugung der Druckluft zum Rückspülen direkt an der die Filtrationsmodule tragende Reckkonstruktion anzuordnen. Falls erforderlich kann der Kompressor durch einen nachgeschalteten Druckbehälter ergänzt werden, welcher der Speicherung erzeugter Druckluft dient. Mit dem Druckbehälter kann sichergestellt werden, dass genügend Druckluft zum vollständigen Rückspülen der Filtrationsanlage im Bedarfsfall zur Verfügung steht.

Die Kombination eines relativ kleinen Kompressors mit einem Druckbehälter verringert die elektrische Anschlussleistung der Gesamteinlage erheblich im Vergleich zu einer alternativen Druckluftbereitstellung über einen Kompressor großer Förderleistung, aber ohne Druckbehälter.

Der optionale Druckbehälter ist vorzugsweise rohrförmig ausgebildet und verläuft längs der Filtratsammelleitung, was insgesamt der Kompaktheit zugute kommt. Über mindestens einen Anschluss ist der rohrförmige Druckbehälter mit der Filtratsammelleitung verbunden. Die vorzugsweise mehreren dazwischenliegenden Anschlüsse werden über Ventile zum Rückspülen geöffnet und bleiben ansonsten geschlossen.

Um eine gleichmäßige Verteilung der Druckluft über die Länge der Filtratsammelleitung, die erfindungsgemäß gleichzeitig als Wasserspeicher dient, zu erreichen, kann die Druckluft an mehreren Stellen entlang der axialen Erstreckung auch über Luftverteilmittel verteilt werden. Diesbezüglich wird vorgeschlagen, innerhalb der Filtratsammelleitung eine Lochblende zum gleichmäßigen Verteilen der Druckluft zu integrieren, wozu die Druckluft auf der dem Filtrat gegenüberliegenden Seite der Lochblende in die Filtratsammelleitung einspeisbar ist.

Alternativ hierzu ist es jedoch auch möglich, innerhalb der Filtratsammelleitung ein mit Druckluft aufblasbaren Elastomermembranbehälter zu integrieren, welcher beim Aufblasen das Wasser innerhalb der Filtratsammelleitung zum Rückspülen in die Filtrationsmodule verdrängt. Ein derartiger Elastomermembranbehälter kann beispielsweise als Gummischlauch oder nach Art einer Gummimembran in Verbindung mit Teilen des Gehäuses der Filtratsammelleitung ausgebildet sein. Die Verwendung eines separaten Elastomermembranbehälters hat den Vorteil, dass keine Luft in das Filtrationsmodul während des Rückspülens gelangen kann, so dass ein gleichzeitiges Schließen von entsprechenden Ventilen während des Rückspülens nicht mehr notwendig ist.

Weitere die Erfindung verbessernde Maßnahmen werden nachstehend gemeinsam mit der Beschreibung von Ausführungsbeispielen der Erfindung anhand der Figuren näher dargestellt. Es zeigt:
- Figur 1: eine schematische Seitenansicht einer Filtrationsanlage in einer ersten Ausführungsform,
- Figur 2: eine schematische Frontansicht der Filtrationsanlage nach Figur 1,
- Figur 3: eine schematische Seitenansicht einer Filtrationsanlage in einer zweiten Ausführungsform, und
- Figur 4: eine schematische Frontansicht der Filtrationsanlage nach Figur 3.

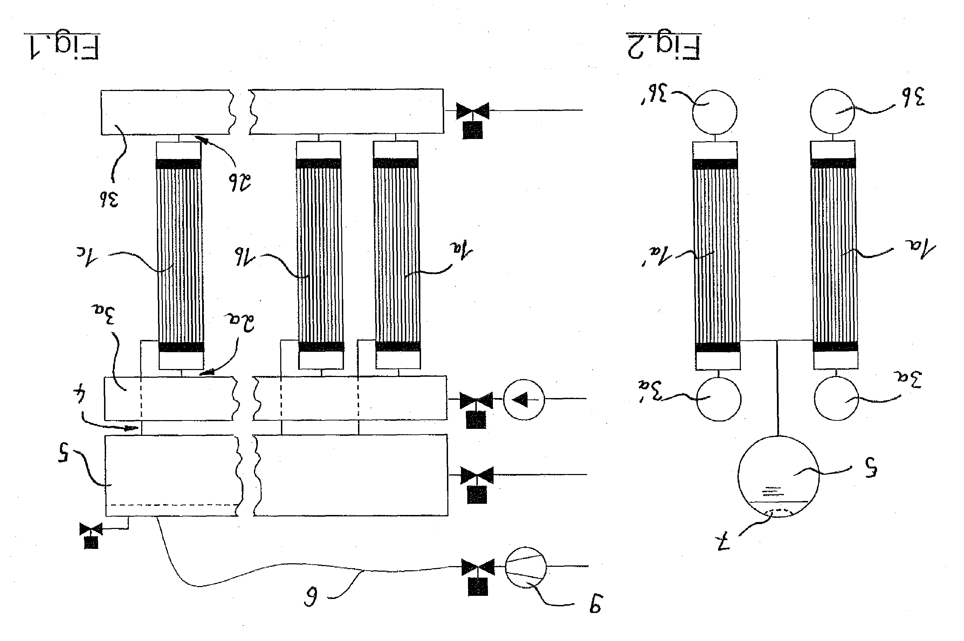

Gemäß Figur 1 umfasst die Filtrationsanlage mehrere in Reihe angeordnete Filtrationsmodule 1a bis 1c, welche strömungstechnisch parallel zueinander geschaltet sind. Über je stirnseitige Zuläufe 2a und 2b wird die zu filtrierende Flüssigkeit durch zwei sich längs der Filtrationsanlage oberhalb und unterhalb der Filtrationsmodule 1a bis 1c erstreckende Sammelleitungen 3a bzw. 3b gespeist. Jedes Filtrationsmodul 1a bis 1c besitzt einen Ablauf 4 für das Filtrat, welches in eine gemeinsame Filtratsammelleitung 5 gelangt.

Die Filtratsammelleitung 5 übt neben der Funktion einer Filtratsammlung aus den einzelnen Filtrationsmodulen 1a bis 1c zwecks Abfuhr nach Außen erfindungsgemäß auch die Funktion eines Rückspülbehälters aus. Insoweit verbleibt ständig Filtrat in der mit einem relativ großen Durchmesser ausgeführten Filtratsammelleitung 5. Zum Rückspülen wird in die Filtratsammelleitung 5 über eine Druckluftleitung 6 Luft bis zu einem Druck von etwa 5 bar gepresst, so dass nach anschließendem Öffnen der Ventile das Wasser aus der Filtratsammelleitung 5 in die Filtrationsmodule 1a bis 1c verdrängt wird und dort ein Spülen der enthaltenen Filtrationsmembrane durchführt. Nach längerer Filtrationszeit ist ein hierdurch bewirktes kurzes, kräftiges Rückspülen ausreichend, um die Filtrationsmodule wieder frei zu spülen.

Gemäß Figur 2 ist die Filtratsammelleitung mittig benachbart zu den beiden oberen Sammelleitungen 3a, 3a' platziert. In die Filtratsammelleitung 5 ist eine Lochblende 7 integriert, welche die Druckluft gleichmäßig entlang der Filtratsammelleitung 5 verteilt.

Vorzugsweise wird das Rückspülen so lange durchgeführt, bis das gesamte Filtrat aus der Filtratsammelleitung 5 durch die Filtrationsmodule 1a bis 1c gepresst ist.

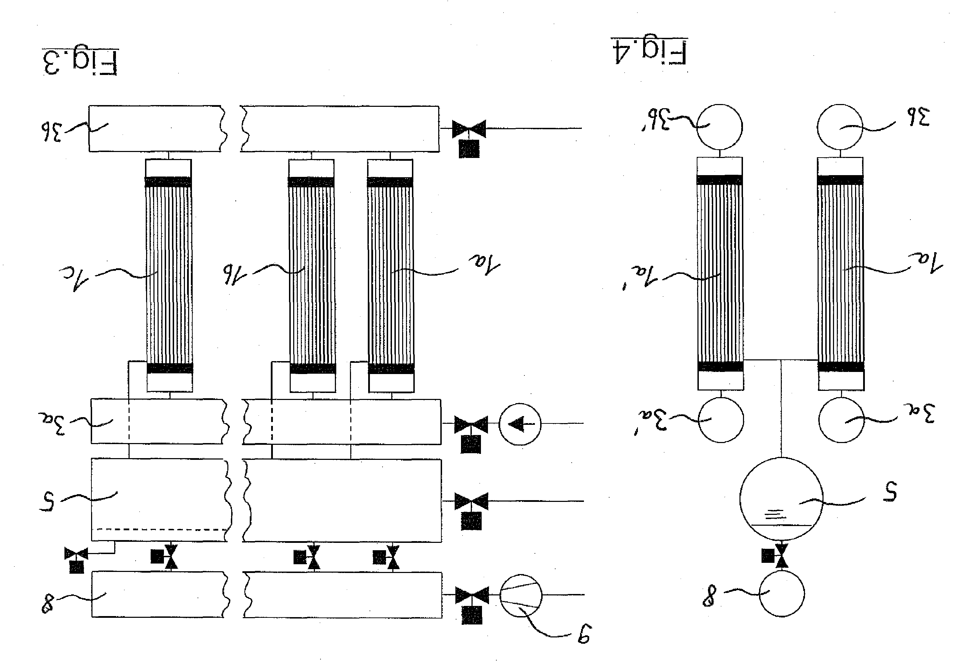

Gemäß Figur 3 wird im Unterschied zu dem vorhergehend beschriebenen Ausführungsbeispiel die Druckluft von einer Druckluftleitung 6 in einen rohrförmigen Druckbehälter 8 gepresst. Es braucht insoweit nur ein Kompressor 9 kleinerer Leistung zur Erzeugung der Druckluft verwendet werden und die erzeugte Druckluft wird im Druckbehälter 8 für einen Rückspülzyklus gespeichert. Die Druckluft wird an mehreren Stellen entlang der axialen Erstreckung über Anschlüsse 10 von dem Druckbehälter 8 gleichmäßig zur Filtratsammelleitung 5 eingespeist. Die Anschlüsse 10 sind jeweils mit Ventilen versehen, welche zum Rückspülen gleichzeitig geöffnet werden.

Gemäß Figur 4 ist der zusätzliche Druckbehälter 8 direkt oberhalb der Filtratsammelleitung 5 mit größerem Durchmesser angeordnet, so dass sich insgesamt eine kompakte Bauform ergibt.

Die Erfindung ist nicht beschränkt auf die vorstehend beschriebenen Ausführungsbeispiele, sondern erstreckt sich auch auf Abwandlungen hiervon, welche vom Schutzbereich der nachfolgenden Ansprüche mit umfasst sind. So ist es beispielsweise auch möglich, anstelle eines Druckbehälters 8 mit mehreren Anschlüssen 10 oder einer Lochblende 7 zur gleichmäßigen Verteilung der die Rückspülung bewirkenden Druckluft innerhalb der als Rückspülbehälter fungierenden Filtratsammelleitung 5 einen mit Druckluft aufblasbaren Elastomermembranbehälter zu integrieren. Ferner ist es natürlich möglich, die Filtrationsanlage in unterschiedlichen Modi zu betreiben, beispielsweise auch nach einer so genannten "Dead-End" Filtration.

Vor der Rückspülung kann es des weiteren hilfreich sein, die Zulaufseite der Membranen zu entwässern. Dies kann auch mit Hilfe der Druckluft geschehen. Dazu wird ein Ventil zwischen der Druckluftleitung 6 oder 8 und der Zulaufsammelleitung 3a geschaltet. Durch Öffnen dieses Ventils und des Ventils zur Entleerung der unteren Sammelleitung 3b, wird das Wasser von der Zulaufseite aus dem Modul heraus gepresst. Alternativ dazu kann das Wasser auf die Filtratseite gepresst werden, wenn die Ventile der Sammelleitungen 3a und 3b geschlossen sind und der Ablauf der Filtratsammelleitung 5 geöffnet ist. Damit sich die Filtratsammelleitung 5 nach der Rückspülung wieder mit Wasser füllen kann, muss die Luft austreten können. Dafür ist ein weiteres Ventil an der Filtratsammelleitung 5 erforderlich.

### Bezugszeichenliste

- 1: Filtrationsmodul
- 2: Zulauf
- 3: Sammelleitung
- 4: Ablauf
- 5: Filtratsammelleitung
- 6: Druckluftleitung
- 7: Lochblende
- 8: Druckbehälter
- 9: Kompressor
- 10: Anschluss

## Patentansprüche

1. Filtrationsanlage mit mehreren vertikal in Reihe angeordneten und parallel geschalteten Filtrationsmodulen (1a bis 1c), woran mindestens ein stirnseitiger Zulauf (2a, 2b) für die zu filtrierende Flüssigkeit angeordnet ist, die je zugeordnete sich längs erstreckende Sammelleitungen (3a bzw. 3b) speisen, wobei jedes Filtrationsmodul (1a bis 1c) mindestens einen Ablauf (4) für das Filtrat aufweist, welche in eine gemeinsame Filtratsammelleitung (5) münden,
**dadurch gekennzeichnet, dass** die die Filtrationsmodule (1a bis 1c) miteinander verbindende Filtratsammelleitung (5) als Rückspülbehälter ausgebildet ist, wobei zum Rückspülen in die Filtratsammelleitung (5) eingeleitete Druckluft das Wasser aus der Filtratsammelleitung (5) in die Filtrationsmodule (1a bis 1c) verdrängt.

2. Filtrationsanlage nach Anspruch 1,
**dadurch gekennzeichnet, dass** die als Rückspülbehälter ausgebildete Filtratsammelleitung (5) einen größeren Querschnitt aufweist als die Sammelleitungen (3a, 3b) für die zu filtrierende Flüssigkeit.

3. Filtrationsanlage nach Anspruch 1,
**dadurch gekennzeichnet, dass** ein Kompressor (9) zur Erzeugung der Druckluft zum Rückspülen an der die Filtrationsmodule (1a bis 1c) tragenden Rackkonstruktion angeordnet ist.

4. Filtrationsanlage nach Anspruch 1 oder 3,
**dadurch gekennzeichnet, dass** die erzeugte Druckluft in einem an der Rackkonstruktion angebrachten Druckbehälter (8) gespeichert ist.

5. Filtrationsanlage nach Anspruch 4,
**dadurch gekennzeichnet, dass** der Druckbehälter (8) rohrförmig ausgebildet ist, längs der Filtratsammelleitung (5) angeordnet ist und über mindestens einen Anschluss (10) hiermit verbunden ist.

6. Filtrationsanlage nach Anspruch 5,
**dadurch gekennzeichnet, dass** die Druckluft an mehreren Stellen entlang der axialen Erstreckung über entsprechende Anschlüsse (10) von dem Druckbehälter (8) gleichmäßig verteilt zu der Filtratsammelleitung (5) gelangt.

7. Filtrationsanlage nach Anspruch 1,
**dadurch gekennzeichnet, dass** innerhalb der Filtratsammelleitung (5) eine Lochblende (7) zum gleichmäßigen Verteilen der Druckluft integriert ist, wozu die Druckluft auf der dem Filtrat gegenüberliegenden Seite der Lochblende (7) in die Filtratsammelleitung (5) einspeisbar ist.

8. Filtrationsanlage nach Anspruch 1,
**dadurch gekennzeichnet, dass** innerhalb der Filtratsammelleitung (5) ein mit Druckluft aufblasbarer Elastomermembranbehälter integriert ist.

9. Filtrationsanlage nach einem der vorstehenden Ansprüche,
**dadurch gekennzeichnet, dass** die Filtratsammelleitung (5) sowie die mindestens eine Sammelleitung (3a, 3b) für die zu filtrierende Flüssigkeit aus einem Kunststoff oder aus Metall bestehen.

10. Filtrationsanlage nach einem der vorstehenden Ansprüche,
**dadurch gekennzeichnet, dass** die als Rückspülbehälter ausgebildete Filtratsammelleitung (5) mittig oberhalb zweier benachbarter Sammelleitungen (3a, 3a') und parallel hierzu verläuft.

11. Filtrationsanlage nach einem der vorstehenden Ansprüche,
**dadurch gekennzeichnet, dass** ein Ventil zwischen der Druckluftleitung und dem Zulaufsammler vorgesehen ist, um die Filtrationsmodule (1a bis 1c) vor der Rückspülung zu entwässern.

12. Filtrationsanlage nach einem der vorstehenden Ansprüche,
**dadurch gekennzeichnet, dass** ein Ventil zur Entlüftung der Filtratsammelleitung (5) vogesehen ist.
